# EUROPEAN PATENT SPECIFICATION

(11) **EP 3 091 214 B1**
(45) Date of publication and mention of the grant of the patent: **21.11.2018**
(21) Application number: 15166877.9
(22) Date of filing: 08.05.2015
(51) Int. Cl.: F02D 41/40, F02M 65/00, F02D 41/20

(54) **MONITORING METHOD TO MONITOR THE BUILT UP OF OBSTRUCTING COATINGS DUE TO COKING IN SPRAYHOLES OF A FUEL INJECTOR JET NOZZLE, COMPENSATION METHOD TO COMPENSATE NEGATIVE EFFECTS OF THESE OBSTRUCTING COATINGS AND ELECTRONIC CONTROL UNIT FOR A COMBUSTION ENGINE**
ÜBERWACHUNGSVERFAHREN ZUR ÜBERWACHUNG DER ZUNAHME VON HEMMENDEN BESCHICHTUNGEN AUFGRUND DER VERKOKUNG IN SPRITZLÖCHERN EINER KRAFTSTOFFEINSPRITZDÜSE, KOMPENSIERUNGSVERFAHREN ZUR KOMPENSIERUNG DER NEGATIVEN AUSWIRKUNGEN DIESER HEMMENDEN BESCHICHTUNGEN UND ELEKTRONISCHE STEUERUNGSEINHEIT FÜR EINEN VERBRENNUNGSMOTOR
PROCÉDÉ DE SURVEILLANCE DE L'ACCUMULATION DE REVÊTEMENTS D'OBSTRUCTION DUE À LA COKÉFACTION DANS DES TROUS D'ÉJECTION D'UNE BUSE D'INJECTEUR DE CARBURANT, PROCÉDÉ DE COMPENSATION POUR LES EFFETS NÉGATIFS DE CES REVÊTEMENTS ET UNITÉ DE COMMANDE ÉLECTRONIQUE POUR UN MOTEUR À COMBUSTION

(43) Date of publication of application: 09.11.2016
(73) Proprietor: Continental Automotive GmbH, 30165 Hannover (DE)
(72) Inventor: Dian, Vincent, 85077 Manching (DE); Radeczky, Janos, 93173 Wenzenbach (DE); Scheid, Matthias, 93059 Regensburg (DE)

(56) References cited:
- WO-A1-2015/004988
- DE-A1-102009 003 211
- DE-A1-102011 007 580
- US-A1- 2004 260 449
- US-A1- 2012 150 417
- US-A1- 2014 033 811
- US-A1- 2014 318 498

## Description

The invention relates to a monitoring method with which the built up of obstructing coatings due to coking in sprayholes of a fuel injector jet nozzle can be monitored. Further, the invention relates to a compensation method to compensate negative effects of the obstructing coatings in the sprayholes and an electronic control unit for a combustion engine which is designed to carry out the monitoring method and the compensation method, respectively.

In known fuel injectors an injector needle is provided which can be moved by an actuator in order to open and close sprayholes of an injector jet nozzle. The injector needle can be directly driven or indirectly driven by a servo arrangement. In a closed state the injector needle seals a path between a high pressure accumulator, the so called rail, and a combustion chamber of a combustion engine. In an opened state a connection is ensured between the rail and the combustion chamber. This connection is defined by the flow characteristic of the injector jet nozzle. Some of the requirements of combustion engines is the reduction of emissions, the lowering of the fuel consumption and the improving of the acoustic characteristics of the engine. At the same time, the requirements to quality and robustness will increase further. To ensure the best pareto between the emission performance of the combustion engine and full load, the injector jet nozzle of the fuel injector comprises a plurality of sprayholes with a small diameter. Due to these small diameters of the sprayholes it is possible to control an accurate fuel injection into a combustion engine, in particular when small injection quantities and multiple injection patterns are to be used.

If the quality of the fuel which is used to be injected into the combustion engine by the fuel injector is rather low, then it can happen that small metallic particles like copper and zinc having a size of about less than 10 µm are present in this low quality fuel. Due to the small size of the metallic particles these metallic particles are not filtered out by the usual filters being located upstream of the fuel injectors in the fuel injection system. The metallic particles can deposit in the area of the sprayholes. Due to this deposit obstructing coatings are forming in the sprayholes of the fuel injector jet nozzle and therefore a decrease of the flow characteristic of the injector jet nozzle is resulting. This is called "coking effect".

Up to now, the coking effect is taken into account during the design of the sprayholes, with the target to get a robust behavior against coking over lifetime. Unfortunately, such designs are leading to limitations in the smallest sprayhole diameter, and by this on the smallest reachable emission results. Furthermore, even if the design is robust against coking, a remaining coking effect is still observed.

From DE 10 2011 007 580 A1 a method of operating an injection valve is known according to which wear of the injection valve, especially wear of a valve seat, and a disturbing effect influencing a maximum flow of a fluid of the injection valve, especially a coking of an injection nozzle of the injection valve, is determined with the use of at least one model. A received parameter of the at least one model is used to correct the control of an actor of the system.

WO 2015/004988 A1 describes a method according to which a corresponding difference is determined by a comparison of the individual delay with the average delay of the injection valve. Dependent on the received result a pulse with correction is carried out in such a manner that the individual injection quantity is adapted to a predetermined injection quantity.

US 2012/0150417 A1 and US 2004/0260449 A1 describe a method for determining coking of a fuel injector according to which a pressure variation in the fuel rail is determined.

US 2014/0318498 A1 describes a system and a method for compensating for coking residues on fuel injectors on the basis of a shift in a fuel injector current profile.

Object of the invention is to provide a monitoring method with which the built up of obstructing coatings due to coking in the sprayholes of a fuel injector jet nozzle can be monitored.

This object is attained with a monitoring method with the feature combination of independent claim 1.

A compensation method with which the negative effects of the obstructing coatings in the sprayholes of the fuel injector jet nozzle can be compensated and an electronic control unit for a combustion engine which is able to carry out the monitoring method and/or the compensation method are subject-matter of further independent claims.

Preferred embodiments of the invention are subject-matter of the dependent claims.

A monitoring method to monitor the built up of obstructing coatings due to coking in sprayholes of a fuel injector jet nozzle comprises the following steps:
- providing at least two fuel injector jet nozzles, each having an injector needle to open and close the sprayholes of the respective fuel injector jet nozzle;
- predefining a desired needle opening duration for each fuel injector jet nozzle;
- detecting an actual needle opening duration for each fuel injector jet nozzle;
- calculating an individual needle opening time delay for each fuel injector jet nozzle based on a comparison of the actual needle opening duration and the desired needle opening duration;
- calculating an average needle opening time delay of the calculated individual needle opening time delays of all provided fuel injector jet nozzles;
- comparing for each fuel injector jet nozzle its individual needle opening time delay with the average needle opening time delay; and
- determining a built up of obstructing coatings (30) due to coking in the sprayholes (14) of the fuel injector jet nozzle (12) if the individual needle opening time delay of the fuel injector jet nozzle (12) is substantially corresponding to the average needle opening time delay and determining that this delay is not related to a built up of obstructing coatings in the sprayholes (14) if there is a significant deviation of the individual needle opening time delay from the average needle opening time delay.

In fuel injectors, in particular in servo driven fuel injectors, there is a connection between the flow rate of the fuel injector jet nozzle and the speed of the injector needle during opening and closing the sprayholes.

During the opening phase of the injector needle the speed is defined by the pressure in the fuel injector jet nozzle, and in case of a decreased flow rate of the fuel injector jet nozzle, which is the case, when the sprayholes are clogged due to the above-described coking effect, the pressure in the fuel injector jet nozzle is bigger than expected, and by this the opening speed is increased. During the closing phase, the pressure increase in the fuel injector jet nozzle leads to a closing speed reduction of the injector needle.

The combination of both effects, namely the injector needle speed increase when opening and the injector needle speed decrease when closing, a flow rate reduction of the fuel injector jet nozzle leads to an increased needle opening duration. Therefore, the actual needle opening duration which can be detected for each provided fuel injector jet nozzle is a measure for the amount of built up of obstructing coatings in the sprayholes.

The actual needle opening duration is not only dependent on the amount of obstructing coatings being present in the sprayholes, but also dependent on general properties of the fuel injector like throttles, overall volume and the surfaces in the fuel injector. Therefore, a predefined needle opening time can be delayed dependent on the coking effect and independent on the coking effect. Therefore, in the monitoring method steps are carried out which enable the distinction between needle opening time delay independent of the coking effect and needle opening time delay linked to the coking effect.

As the coking effect is impacting all provided fuel injectors and therefore all fuel injector jet nozzles at the same time, a delay of an average value calculated over all of the fuel injector jet nozzles correlates with the coking effect. Hence, after detecting the actual needle opening duration for each single fuel injector jet nozzle and out of this value calculating the individual needle opening time delay for each of the fuel injector jet nozzles, an average value of the needle opening time delay on all fuel injector jet nozzles provided in the engine is calculated.

Then, in order to decide, if the calculated individual needle opening time delay of each fuel injector jet nozzle is related to the coking effect or not, this individual needle opening time delay is compared with the calculated average needle opening time delay of all fuel injector jet nozzles.

In the monitoring method a further step is carried out in which it is then determined if a built up of obstructing coatings due to coking in the sprayholes of the fuel injector jet nozzle is present, based on the above described comparison of the average and the individual needle opening time delay. In case the individual needle opening time delay of the injector jet nozzle is substantially corresponding to the average needle opening time delay it is determined that a built up of obstructing coatings is present in the sprayholes. In case there is a significant deviation of the individual needle opening time delay from the average needle opening time, it is determined that this delay is not related to a built up of obstructing coatings in the sprayholes.

In a preferred embodiment the actual needle opening duration for each fuel injector jet nozzle is detected by detecting a needle closing point of time of the injector needle. As in servo driven fuel injectors it is usual that the needle closing point of time is in any case detected, for example by an electronic control unit being present in the combustion engine, a value can be used in the monitoring method which is already present and no additional detection step or detection equipment has to be provided. Therefore, the delayed needle closing point of time due to the coking effect can be easily detected by the electronic control unit.

In a preferred embodiment a piezo actuator is provided to induce a movement of the injector needle, and a voltage course of the piezo actuator is recorded. The needle closing point of time is detected by identifying a predetermined voltage feature in the recorded voltage course. In the preferred case that a servo driven injector is used, the motion of the injector needle is generating a change in a control chamber volume in the servo driven injector, and due to this, the pressure behavior in the control chamber is intimately linked to this injection needle motion. In case the injector needle is in the closed position, there is almost no flow going through an outlet throttle of the control chamber and the pressure is almost equal to the pressure in the control chamber. As the piezo actuator is directly in contact with the injection needle, it is possible to use the piezo actuator as a pressure sensor monitoring the pressure inside the control chamber. At the needle closing point of time there is no volume change anymore in the control chamber and the pressure is immediately increasing due to the refilling through an inlet throttle of the servo arrangement. This sudden increase of the pressure results in a sudden voltage feature in the recorded voltage course of the piezo actuator and therefore, the needle closing point of time can be directly detected via the piezo actuator.

In a further preferred embodiment of the monitoring method a flow rate reduction of the fuel injector jet nozzle is monitored by providing a map which relates an actual needle opening duration to a flow rate. A first actual needle opening duration of the nozzle is detected and a second actual needle opening duration of the nozzle is detected and out of these detected values the respective first and second flow rate can be determined out of the provided map. The difference of the determined first and second flow rates corresponds to the flow rate reduction which happens when in the sprayholes of the fuel injector jet nozzles obstructing coatings are building up. Therefore, when calculating the difference of the determined first and second flow rates the flow rate reduction can be monitored.

It is further advantageous to know the actual flow rate reduction of the fuel injector jet nozzle as based on this value a compensation of the flow rate reduction can be carried out.

In a preferred embodiment a desired flow rate of the fuel injector jet nozzle is predefined and a signal is output, in particular by the electronic control unit, if the flow rate reduction determined as described above exceeds 3 %, in particular 5 %, of the predefined flow rate. For example, a flow rate reduction of about 3 % of a predefined flow rate is acceptable as it is possible by a certain control method carried out for example in the electronic control unit of the combustion engine to compensate this flow rate reduction. In case the flow rate reduction exceeds these acceptable 3 %, the fuel injector has to be removed or cleaned to remove the obstructing coatings in the sprayholes and therefore a service is necessary. Hence, it is advantageous to put out a signal indicating an inacceptable flow rate reduction.

In a preferred embodiment the monitoring method described above is carried out every time the fuel injector jet nozzle is carrying out an injection cycle. More preferably, the monitoring method is carried out every time the fuel injector jet nozzle is carrying out a single injection. Therefore, a constant monitoring of the flow characteristics of the fuel injector jet nozzle can be preferably carried out.

In a compensation method to compensate negative effects of obstructing coatings in sprayholes of a fuel injector jet nozzle due to coking, the following steps are carried out:
- providing a map of a flow rate of the fuel injector jet nozzle dependent on a fuel pressure prevailing in the fuel injector jet nozzle;
- carrying out the above described monitoring method, wherein a flow rate reduction of the flow rate of the fuel injector jet nozzle is monitored;
- determining a necessary fuel pressure increase to compensate the flow rate reduction based on the provided map;
- increasing the fuel pressure in the fuel injector jet nozzle according to the determined fuel pressure increase.

The built up of obstructing coatings in the sprayholes of the fuel injector jet nozzle has two effects. On the one hand the needle opening duration is extended due to the amended speed of the injector needle during opening and closing the sprayholes. On the other hand due to the built up of the obstructing coatings the diameter of the sprayholes is decreased and therefore less fuel can pass through the sprayholes in a predefined time slot.

Therefore, the built up of obstructing coatings in the sprayholes also results in a flow rate reduction of the fuel injector jet nozzle. Via the above described monitoring method the reduction of the flow rate can be determined and can be compensated by increasing the fuel pressure in the fuel injector jet nozzle. By this measure the flow rate through the fuel injector jet nozzle comes back to the requested value. The fuel pressure in the fuel injector jet nozzle increased by increasing the pressure in the rail.

In a preferred embodiment also the predefined needle opening duration is reduced for each fuel injector jet nozzle in an amount corresponding to the calculated individual needle opening time delay. Therefore, the extension of the needle opening time due to the obstructing coatings in the sprayholes can be compensated. This is advantageous as the needle opening duration determines the duration of the combustion in the combustion chamber. The longer the duration of the combustion the higher is the combustion temperature and therefore also the temperature of the exhaust gases, which is undesirable. Further, it is desired that the fuel injector carries out multiple injections in a short time slot wherein the time gap between the single injections should be preferably smaller than 200 µs. This is difficult to attain if the needle opening duration is too long, therefore it is preferable to compensate the needle opening time delay by shortening the needle opening duration.

An electronic control unit is provided in a combustion engine, wherein this electronic control unit is able to carry out the monitoring method as described above and/or the compensation method as described above.

The monitoring method and the compensation method are both in particular carried out with fuel injectors used in diesel applications.

A preferred embodiment of the invention will be illustrated in detail with reference to the accompanying drawings, where
- fig. 1: shows a perspective sectional view of a fuel injector with a fuel injector jet nozzle to inject a fuel into a combustion chamber of a combustion engine;
- fig. 2: shows an enlarged sectional view of the fuel injector jet nozzle comprising sprayholes being clogged by obstructing coatings being built up by a coking effect;
- fig. 3: shows in a) a diagram relating to the injection needle opening and closing velocity shift over lifetime due to the built up of obstructing coatings as shown in fig. 2 and in b) shows a diagram relating to a flow rate shift of the fuel injector jet nozzle due to the built up of obstructing coatings as shown in fig. 2;
- fig. 4: shows a flow chart representing the steps carried out in a monitoring method to monitor the built up of obstructing coatings in the sprayholes as shown in fig. 2;
- fig. 5: shows a diagram of a voltage course measured at a piezo actuator used to move the injector needle of the fuel injector of fig. 1;
- fig. 6: shows a flow chart representing the steps carried out when monitoring a flow rate reduction of the fuel injector of fig. 1 due to the built up of obstructing coatings as shown in fig. 2;
- fig. 7: shows a flow chart representing the steps carried out in a compensation method to compensate the negative effects of obstructing coatings as shown in fig. 2; and
- fig. 8: shows diagrams relating to a) the needle opening duration of the injector needle and b) the flow rate of the fuel injector jet nozzle when the compensation method of fig. 7 is carried out.

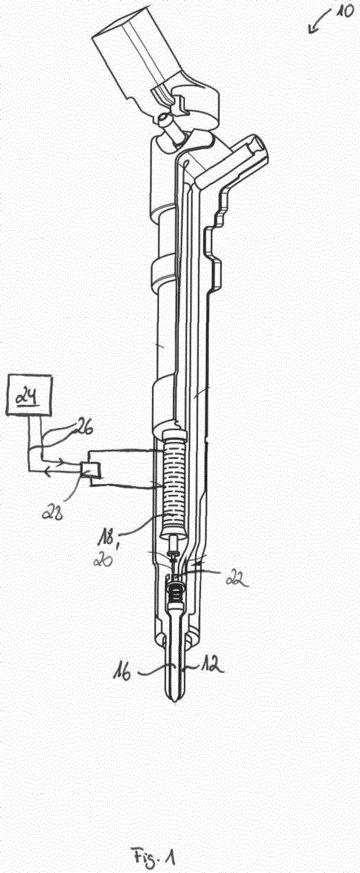

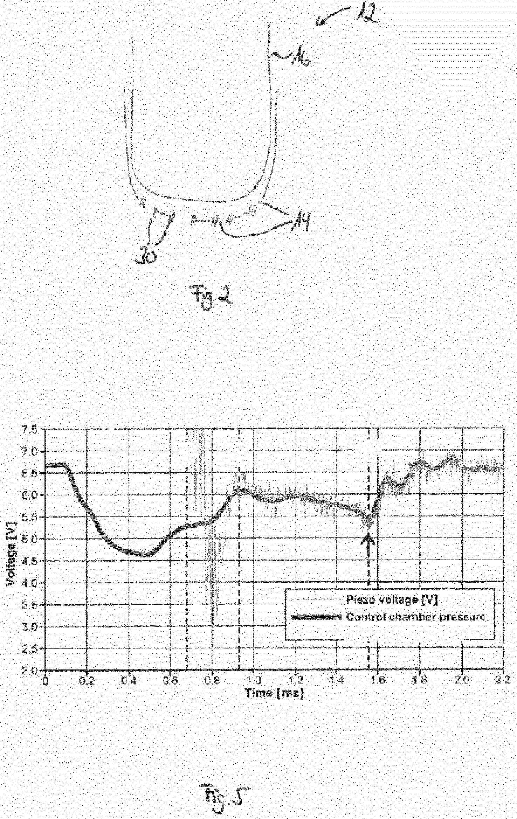

Fig. 1 shows a perspective and partly sectional view of a fuel injector 10 which is used to inject a fuel, for example diesel, into a combustion chamber of a combustion engine. The fuel injector 10 comprises a fuel injector jet nozzle 12 which is shown in greater detail in fig. 2. The fuel injector jet nozzle 12 comprises a plurality of sprayholes 14 through which the fuel can enter the combustion engine, and an injector needle 16 which is formed to open and close the sprayholes 14. To move the injector needle 16 into the opening position and the closing position, respectively, an actuator 18, in particular a piezo actuator 20, is provided in the fuel injector 10. The fuel injector 10 is formed as a servo driven fuel injector 10 and therefore comprises a control chamber 22 which couples the piezo actuator 20 to the injector needle 16.

To control the piezo actuator 20 and therefore the injector needle 16 in its movement an electronic control unit 24 is provided which is connected with the piezo actuator 20. Via connections 26 between the electronic control unit 24 and the piezo actuator 20 control signals from the electronic control unit 24 can be transferred to the piezo actuator 20 and further signals detected at the piezo actuator 20 via a detection unit 28 can be transferred to the electronic control unit 24.

During the lifetime of the fuel injector 10 and basically due to low quality fuel being injected by the fuel injector 10 obstructing coatings 30 can build up in the sprayholes 14 of the fuel injector jet nozzle 12, as is shown in fig. 2. These obstructing coatings 30 are based on metallic particles being present in low quality fuel such as copper and zinc and which are not filtered out by filters being located upstream the fuel injector jet nozzle 12 in a fuel injection system. This problem is known as the so called "coking effect". The obstructing coatings 30 in the sprayholes 14 reduce the diameter of the sprayholes 14 which is anyway relatively small to attain a good pareto between emission performance and full load of the fuel injector 10.

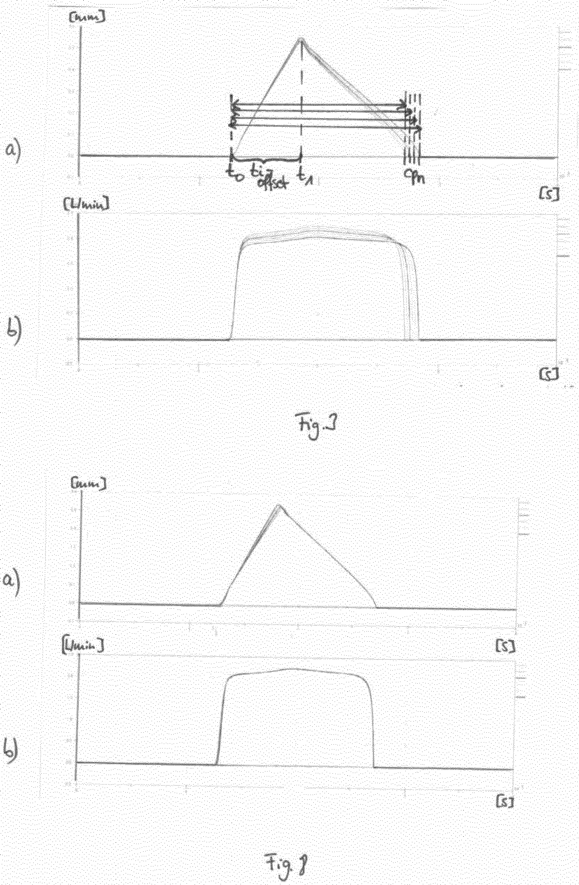

Fig. 3 shows diagrams which illustrate the effects which arise due to the clogging of the sprayholes 14 by the obstructing coatings 30.

In diagram a) the opening amount of the injector needle 16 (in mm) is plotted against the time (in s). At time to the piezo actuator 20 receives a signal from the electronic control unit 24 to initiate opening of the injector needle 16 and therefore the opening movement of the injector needle 16 starts. At t₁ the opening movement of the injector needle 16 is ended and the injector needle 16 returns back to the closed position. The time distance between t₁ where the closing of the injector needle 16 is started and to where the opening of the injector needle 16 is started is known as the so-called ti-offset. As can be seen in the diagram of fig. 3a) the point in time where the injector needle 16 is fully returned to its closing position shifts over the lifetime of the fuel injector 10. Hence, fig. 3a) shows the opening and closing characteristic of the injector needle 16 time dependent for several injection cycles of the lifetime of the fuel injector 10. Due to the shifting of the needle closing point cpₙ the needle opening duration opₙ extends during the lifetime of the fuel injector 10.

In fig. 3b) the flow rate (in L/min) of the fuel injected by the injector jet nozzle 12 is plotted against the time (in s) the injector jet nozzle 12 is in its opened state. Again, there are several plots shown representing the lifetime of the fuel injector 10. As can be seen the flow rate decreases over the lifetime of the fuel injector 10 and at the same time the fuel is injected into the combustion engine for a longer time slot due to the longer needle opening duration opₙ as shown in fig. 3a). The longer needle opening duration opₙ results in a longer combustion time and therefore a higher temperature of the exhaust gases which is an undesired effect. Further, the longer needle opening duration opₙ makes it difficult to carry out multiple injections with small time distance.

Therefore, it is desirable that the shifting of the needle closing point cpₙ as well as the flow rate reduction can be compensated at least for a certain part of the lifetime of a fuel injector 10.

To make a compensation possible, it is necessary to monitor the built up of obstructing coatings 30 in the sprayholes 14.

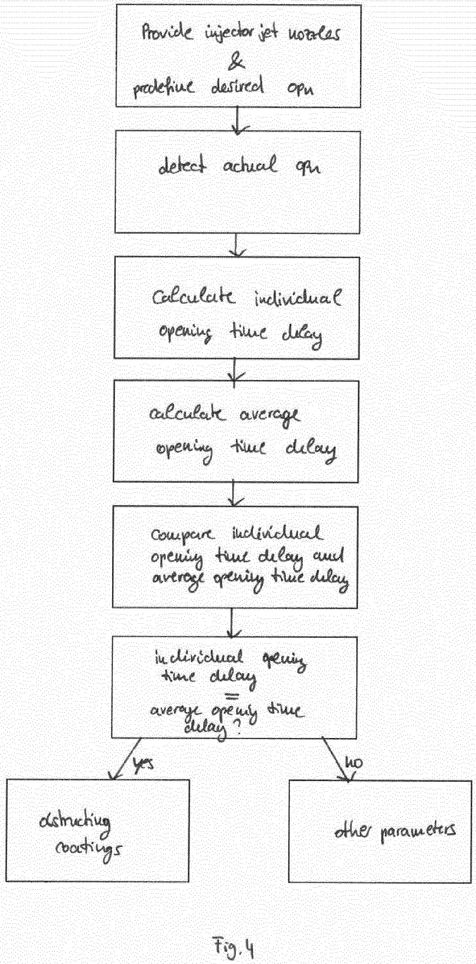

A method with which this built up can be monitored is explained in the following with reference to the flow chart shown in fig. 4.

In a first step at least two fuel injector jet nozzles 12 are provided, each having an injector needle 16, and a desired needle opening duration opₙ is predefined for each fuel injector jet nozzle 12.

In a next step an actual needle opening duration opₙ for each injector jet nozzle 12 is detected, in particular by using a piezo actuator 20.

The diagram shown in fig. 5 shows a voltage course of the voltage measured at a piezo actuator 20 during an injection cycle of the fuel injector 10. As is marked by an arrow there is a voltage feature present in the voltage course which indicates the point in time when the injector needle 16 is fully closed. Therefore, by monitoring the voltage course of the piezo actuator 20 the exact needle closing point in time cpₙ can be detected for each fuel injector jet nozzle 12.

In the next step the individual needle opening time delay for each injector jet nozzle 12 is calculated by comparing the predefined desired needle opening duration and the actual needle opening duration measured via the piezo actuator 20.

As the individual needle opening time delay is not only dependent on the built up of obstructing coatings 30 in the sprayholes 14, but also dependent on other parameters, the influence of the other parameters has to be eliminated. This is done by calculating an average needle opening time delay out of all individual needle opening time delays of all fuel injector net nozzles 12 being present in the combustion engine.

In the next step the individual needle opening time delay of each fuel injector jet nozzle 12 and the average needle opening time delay are compared, and in the next step it is determined if the individual opening time delay of a specific fuel injector jet nozzle 12 corresponds to the value of the average needle opening time delay over all fuel injector jet nozzles 12.

If this is the case, it is decided that the individual needle opening time delay is related to the built up of obstructing coatings 30. If this is not the case, it is decided that the individual needle opening time delay of the specific fuel injector jet nozzle 12 is related to other parameters.

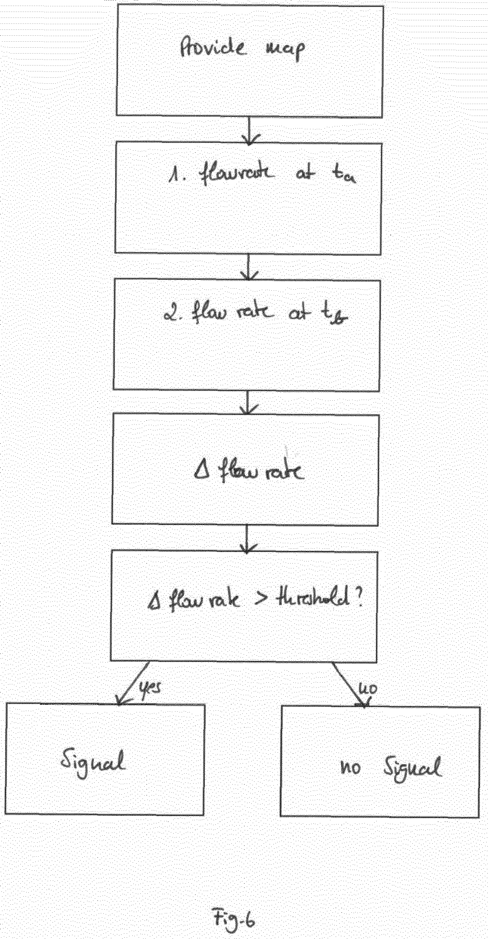

In case it is decided that the individual needle opening time delay of the specific fuel injector jet nozzle 12 is dependent on the built up of obstructing coatings 30 in the sprayholes 14 of said fuel injector jet nozzle 12, in the monitoring method a flow rate reduction of the fuel injector jet nozzle 12 can be monitored in order to compensate this flow rate reduction later on. The monitoring method will be explained in the following with reference to the flow chart shown in fig. 6.

In a first step there is provided a map which relates a needle opening duration opₙ to a specific flow rate.

Then, in a next step at a first point in time tₐ a first actual needle opening duration opₙ is measured via the voltage chart of the piezo actuator 20 as described above and using the provided map a first flow rate being present at the first point in time tₐ in the injector jet nozzle 12 can be determined.

In a next step, at a later, second point in time t_{b}, a second flow rate can be determined using the same method as when determining the first flow rate at tₐ.

In the next step the difference of the two determined flow rates is calculated and then in the next step decided, if this difference is exceeding a predefined threshold value. This threshold value can be defined at between 3 % and 5 % of a flow rate which is the desired flow rate of the fuel injector jet nozzle 12.

In case the difference in flow rates exceeds the threshold value, a signal is put out by the electronic control unit 24, and if the difference in flow rates is smaller than the threshold value no signal is put out by the electronic control unit 24. For example, if the threshold value is exceeded, the signal is used to signalize a necessary service of the fuel injector 10. Until the threshold value is exceeded, the flow rate of the fuel injector 10 is constantly changing as it has been shown with reference to fig. 3.

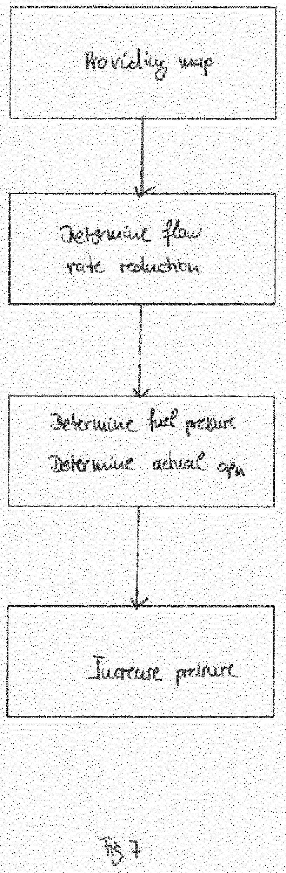

This change in flow rate can be compensated by a specially designed compensation method being explained in further detail in the following with reference to fig. 7.

In a first step of the compensation method a map is provided which relates a flow rate of the fuel injector jet nozzle 12 to a fuel pressure which is prevailing in said fuel injector jet nozzle 12. Afterwards the monitoring method as described above is carried out to determine the flow rate reduction of said fuel injector jet nozzle 12. In the next step, by comparing the determined flow rate reduction with the provided method it can be determined to what extend the fuel pressure is to be increased to compensate this flow rate reduction. In the last step the fuel pressure in the fuel injector jet nozzle 12 is then increased to the determined value of the necessary fuel pressure to compensate the flow rate reduction being caused by the obstructing coatings 30 built up.

Additionally, as the flow rate reduction is related to the obstructing coating 30 built up and at the same time the needle opening duration is also related to the obstructing coating 30 built up, it can also be determined to which amount the injector needle 16 is opened too long. Based on this determination the ti-offset can be adapted such that the needle opening duration opₙ can be corrected to the desired amount.

Fig. 8 shows the diagrams for a needle opening and closing characteristic, in picture a) for a plurality of injection cycles during the lifetime of a fuel injector 10 and in picture b) the respective flow rates of a fuel injector jet nozzle 12 in case the compensation method is carried out. As can be seen the needle opening duration opₙ is kept constant as well as the flow rate of the fuel injector jet nozzle 12 by using the compensation method.

In order to be able to compensate the coking effects on the injector jet nozzle 12, the monitoring method as well as the compensation method is carried out at least for each injection cycle of the fuel injector 10, and more preferably for each single injection the fuel injector 10.

Therefore, an on-board coking detection and compensation is provided which can be implemented in the electronic control unit 24 of a combustion engine. Compared to a system without such an on-board coking detection and compensation, a described system could be optimized without taking severe coking robustness constraints leading to a better compromise between emission and full load performance. In case of coking during the lifetime of an engine, the maximum amount of quantity will be reduced, leading to a power loss for the driver. However, with the described functions, this power loss can be compensated.

## Claims

1. Monitoring method to monitor the built up of obstructing coatings (30) due to coking in sprayholes (14) of a fuel injector jet nozzle (12), the monitoring method comprising the steps of:
- providing at least two fuel injector jet nozzles (12), each having an injector needle (16) to open and close the sprayholes (14) of the respective fuel injector jet nozzle (12);
- predefining a desired needle opening duration (opₙ) for each fuel injector jet nozzle (12);
- detecting an actual needle opening duration (opₙ) for each fuel injector jet nozzle (12);
- calculating an individual needle opening time delay for each fuel injector jet nozzle (12) based on a comparison of the actual needle opening duration (opₙ) and the desired needle opening duration (opₙ) ;
- calculating an average needle opening time delay of the calculated individual needle opening time delays of all provided fuel injector jet nozzles (12);
- comparing for each fuel injector jet nozzle (12) its individual needle opening time delay with the average needle opening time delay; and
- determining a built up of obstructing coatings (30) due to coking in the sprayholes (14) of the fuel injector jet nozzle (12) if the individual needle opening time delay of the fuel injector jet nozzle (12) is substantially corresponding to the average needle opening time delay and determining that this delay is not related to a built up of obstructing coatings in the sprayholes (14) if there is a significant deviation of the individual needle opening time delay from the average needle opening time delay.

2. Monitoring method according to claim 1,
**characterized in that** when detecting the actual needle opening duration (opₙ) for each fuel injector jet nozzle (12) a needle closing point of time (cpₙ) of the injector needle (16) is detected.

3. Monitoring method according to claim 2,
**characterized in that** a piezo actuator (20) is provided to induce a movement of the injector needle (16), and a voltage course of the piezo actuator (20) is recorded, wherein the needle closing point of time (cpₙ) is detected by identifying a predetermined voltage feature in the recorded voltage course.

4. Monitoring method according to any of the claims 1 to 3, **characterized by** monitoring a flow rate reduction of the fuel injector jet nozzle (12) by providing a map relating an actual needle opening duration (opₙ) to a flow rate, detecting a first actual needle opening duration (opₙ) of the nozzle (12) and a second actual needle opening duration (opₙ) of the nozzle (12) and determining the respective first and second flow rate based on the provided map, and calculating the difference of the determined first and second flow rates.

5. Monitoring method according to claim 4,
**characterized by** predefining a desire flow rate of the fuel injector jet nozzle (12) and putting out a signal if the flow rate reduction exceeds 3%, in particular 5%, of the predefined flow rate.

6. Monitoring method according to any of the claims 1 to 5, **characterized in that** the monitoring method is carried out every time the fuel injector jet nozzle (12) is carrying out an injection cycle, in particular every time the fuel injector jet nozzle (12) is carrying out a single injection.

7. Compensation method to compensate negative effects of obstructing coatings (30) in sprayholes (14) of a fuel injector jet nozzle (12) due to coking, the compensation method comprising the steps of:
- providing a map of a flow rate of the fuel injector jet nozzle (12) dependent on a fuel pressure prevailing in the fuel injector jet nozzle (12);
- carrying out the monitoring method according to any of the claims 4 to 6, wherein a flow rate reduction of the flow rate of the fuel injector jet nozzle (12) is monitored;
- determining a necessary fuel pressure increase to compensate the flow rate reduction based on the provided map;
- increasing the fuel pressure in the fuel injector jet nozzle (12) according to the determined fuel pressure increase.

8. Compensation method according to claim 7, **characterized by** reducing the predefined needle opening duration for each fuel injector jet nozzle (12) in an amount corresponding to the calculated individual needle opening time delay.

9. Electronic control unit (24) for a combustion engine, designed to carry out the monitoring method according to any of the claims 1 to 6 and/or to carry out the compensation method according to any of the claims 7 or 8.

## Patentansprüche

1. Überwachungsverfahren, um den Aufbau von Blockierbelägen (30) aufgrund von Verkoken in Sprühöffnungen (14) einer Kraftstoffeinspritzdüse (12) zu überwachen, wobei das Überwachungsverfahren die folgenden Schritte aufweist:
- Bereitstellen von mindestens zwei Kraftstoffeinspritzdüsen (12), die jeweils eine Injektornadel (16) besitzen, um die Sprühöffnungen (14) der entsprechenden Kraftstoffeinspritzdüse (12) zu öffnen und zu schließen;
- Vordefinieren einer gewünschten Nadelöffnungsdauer (opₙ) für jede Kraftstoffeinspritzdüse (12);
- Detektieren einer tatsächlichen Nadelöffnungsdauer (opₙ) für jede Kraftstoffeinspritzdüse (12);
- Berechnen einer individuellen Nadelöffnungszeitverzögerung für jede Kraftstoffeinspritzdüse (12) auf der Grundlage eines Vergleichs der tatsächlichen Nadelöffnungsdauer (opₙ) und der gewünschten Nadelöffnungsdauer (opₙ) ;
- Berechnen einer durchschnittlichen Nadelöffnungszeitverzögerung der berechneten individuellen Nadelöffnungszeitverzögerung aller bereitgestellten Kraftstoffeinspritzdüsen (12);
- Vergleichen für jede Kraftstoffeinspritzdüse (12) ihrer individuellen Nadelöffnungszeitverzögerung mit der durchschnittlichen Nadelöffnungszeitverzögerung; und
- Bestimmen eines Aufbaus von Blockierbelägen (30) aufgrund von Verkoken in den Sprühöffnungen (14) der Kraftstoffeinspritzdüse (12), wenn die individuelle Nadelöffnungszeitverzögerung der Kraftstoffeinspritzdüse (12) im Wesentlichen der durchschnittlichen Nadelöffnungszeitverzögerung entspricht, und Bestimmen, dass diese Verzögerung nicht mit einem Aufbau von Blockierbelägen in den Sprühöffnungen (14) in Beziehung steht, wenn eine wesentliche Abweichung der individuellen Nadelöffnungszeitverzögerung von der durchschnittlichen Nadelöffnungszeitverzögerung vorliegt.

2. Überwachungsverfahren nach Anspruch 1,
**dadurch gekennzeichnet, dass** dann, wenn die tatsächliche Nadelöffnungsdauer (opₙ) für jede Kraftstoffeinspritzdüse (12) detektiert wird, ein Nadelschließzeitpunkt (cpₙ) der Injektornadel (16) detektiert wird.

3. Überwachungsverfahren nach Anspruch 2,
**dadurch gekennzeichnet, dass** ein Piezoaktor (20) bereitgestellt wird, um eine Bewegung der Injektornadel (16) zu induzieren, und ein Spannungsverlauf des Piezoaktors (20) aufgezeichnet wird, wobei der Nadelschließzeitpunkt (cpₙ) durch Identifizieren eines vorgegebenen Spannungsmerkmals im aufgezeichneten Spannungsverlauf detektiert wird.

4. Überwachungsverfahren nach einem der Ansprüche 1 bis 3,
**gekennzeichnet durch** Überwachen einer Durchflussmengenverringerung der Kraftstoffeinspritzdüse (12) durch Bereitstellen eines Kennfeldes, das eine tatsächliche Nadelöffnungsdauer (opₙ) mit einer Durchflussmenge in Beziehung setzt, eine erste tatsächliche Nadelöffnungsdauer (opₙ) der Düse (12) und eine zweite tatsächliche Nadelöffnungsdauer (opₙ) der Düse (12) detektiert und die entsprechenden ersten und zweiten Durchflussmengen auf der Grundlage des bereitgestellten Kennfeldes bestimmt, und Berechnen des Unterschiedes der bestimmten ersten und zweiten Durchflussmenge.

5. Überwachungsverfahren nach Anspruch 4,
**gekennzeichnet durch** Vordefinieren einer gewünschten Durchflussmenge der Kraftstoffeinspritzdüse (12) und Ausgeben eines Signals, wenn die Durchflussmengenverringerung 3 %, insbesondere 5 %, der vordefinierten Durchflussmenge überschreitet.

6. Überwachungsverfahren nach einem der Ansprüche 1 bis 5,
**dadurch gekennzeichnet, dass** das Überwachungsverfahren jedes Mal ausgeführt wird, wenn die Kraftstoffeinspritzdüse (12) einen Einspritzzyklus ausführt, insbesondere jedes Mal dann, wenn die Kraftstoffeinspritzdüse (12) einen einzelnen Einspritzvorgang ausführt.

7. Kompensationsverfahren, um negative Effekte von Blockierbelägen (30) in Sprühöffnungen (14) einer Kraftstoffeinspritzdüse (12) aufgrund von Verkoken zu kompensieren, wobei das Kompensationsverfahren die folgenden Schritte aufweist:
- Bereitstellen eines Kennfeldes einer Durchflussmenge der Kraftstoffeinspritzdüse (12) in Abhängigkeit eines Kraftstoffdrucks, der in der Kraftstoffeinspritzdüse (12) herrscht;
- Ausführen des Überwachungsverfahrens nach einem der Ansprüche 4 bis 6, wobei eine Durchflussmengenverringerung der Durchflussmenge der Kraftstoffeinspritzdüse (12) überwacht wird;
- Bestimmen eines Kraftstoffdruckanstiegs, der erforderlich ist, um die Durchflussmengenverringerung auf der Grundlage des bereitgestellten Kennfeldes zu kompensieren; und
- Erhöhen des Kraftstoffdrucks in der Kraftstoffeinspritzdüse (12) gemäß dem bestimmten Kraftstoffdruckanstieg.

8. Kompensationsverfahren nach Anspruch 7,
**gekennzeichnet durch** Verringern der vordefinierten Nadelöffnungsdauer für jede Kraftstoffeinspritzdüse (12) um eine Menge, die der berechneten individuellen Nadelöffnungszeitverzögerung entspricht.

9. Elektronische Steuereinheit (24) für eine Brennkraftmaschine, die ausgelegt ist, das Überwachungsverfahren nach einem der Ansprüche 1 bis 6 auszuführen und/oder das Kompensationsverfahren nach einem der Ansprüche 7 oder 8 auszuführen.

## Revendications

1. Procédé de surveillance pour surveiller l'accumulation de revêtements obstructifs (30) dus à un cokage dans des trous de pulvérisation (14) d'une buse d'injection d'injecteur de carburant (12), le procédé de surveillance comprenant les étapes de :
- la fourniture d'au moins deux buses d'injection d'injecteur de carburant (12), chacune possédant une aiguille d'injecteur (16) pour ouvrir et fermer les trous de pulvérisation (14) de la buse d'injection d'injecteur de carburant respective (12) ;
- la prédéfinition d'une durée d'ouverture d'aiguille souhaitée (opₙ) pour chaque buse d'injection d'injecteur de carburant (12) ;
- la détection d'une durée d'ouverture d'aiguille réelle (opₙ) pour chaque buse d'injection d'injecteur de carburant (12) ;
- le calcul d'un retard individuel d'ouverture d'aiguille pour chaque buse d'injection d'injecteur de carburant (12) sur la base d'une comparaison de la durée d'ouverture d'aiguille réelle (opₙ) et de la durée d'ouverture d'aiguille souhaitée (opₙ) ;
- le calcul d'un retard moyen d'ouverture d'aiguille des retards calculés d'ouverture d'aiguille de toutes les buses d'injection d'injecteur de carburant fournies (12) ;
- la comparaison, pour chaque buse d'injection d'injecteur de carburant (12), de son retard individuel d'ouverture d'aiguille au retard moyen d'ouverture d'aiguille ; et
- la détermination d'une accumulation de revêtements obstructifs (30) dus à un cokage dans les trous de pulvérisation (14) de la buse d'injection d'injecteur de carburant (12) si le retard individuel d'ouverture d'aiguille de la buse d'injection d'injecteur de carburant (12) correspond sensiblement au retard moyen d'ouverture d'aiguille et la détermination que ce retard n'est pas connexe à une accumulation de revêtements obstructifs dans les trous de pulvérisation (14) s'il y a un écart important du retard individuel d'ouverture d'aiguille par rapport au retard moyen d'ouverture d'aiguille.

2. Procédé de surveillance selon la revendication 1,
**caractérisé en ce que**, lors de la détection de la durée d'ouverture d'aiguille réelle (cpₙ) pour chaque buse d'injection d'injecteur de carburant (12), un moment de fermeture d'aiguille (cpₙ) de l'aiguille d'injecteur (16) est détecté.

3. Procédé de surveillance selon la revendication 2,
**caractérisé en ce qu'**un piézo-actionneur (20) est prévu pour entraîner un mouvement de l'aiguille d'injecteur (16), et une courbe de tension du piézo-actionneur (20) est enregistrée, dans lequel le moment de fermeture d'aiguille (opₙ) est détecté en identifiant une caractéristique de tension prédéterminée dans la courbe de tension enregistrée.

4. Procédé de surveillance selon l'une quelconque des revendications 1 à 3,
**caractérisé par** la surveillance d'une réduction de débit de la buse d'injection d'injecteur de carburant (12) par la fourniture d'une carte associant une durée d'ouverture d'aiguille réelle (opₙ) à un débit, la détection d'une première durée d'ouverture d'aiguille réelle (opₙ) de la buse (12) et une seconde durée d'ouverture d'aiguille réelle (opₙ) de la buse (12) et la détermination des premier et second débits respectifs sur la base de la carte fournie, et le calcul de la différence des premier et second débits déterminés.

5. Procédé de surveillance selon la revendication 4,
**caractérisé par** la prédéfinition d'un débit souhaité de la buse d'injection d'injecteur de carburant (12) et la production d'un signal si la réduction de débit dépasse 3 %, en particulier 5 %, du débit prédéfini.

6. Procédé de surveillance selon l'une quelconque des revendications 1 à 5, **caractérisé en ce que** le procédé de surveillance est réalisé à chaque fois que la buse d'injection d'injecteur de carburant (12) réalise un cycle d'injection, en particulier à chaque fois que la buse d'injection d'injecteur de carburant (12) réalise une seule injection.

7. Procédé de compensation pour compenser des effets négatifs de revêtements obstructifs (30), dans des trous de pulvérisation (14) d'une buse d'injection d'injecteur de carburant (12), dus à un cokage, le procédé de compensation comprenant les étapes de :
- la fourniture d'une carte d'un débit de la buse d'injection d'injecteur de carburant (12) en fonction d'une pression de carburant prévalente dans la buse d'injection d'injecteur de carburant (12) ;
- la réalisation du procédé de surveillance selon l'une quelconque des revendications 4 à 6, dans lequel une réduction de débit du débit de la buse d'injection d'injecteur de carburant (12) est surveillée ;
- la détermination d'une augmentation de pression de carburant nécessaire pour compenser la réduction de débit sur la base de la carte fournie ;
- l'augmentation de la pression de carburant dans la buse d'injection d'injecteur de carburant (12) selon l'augmentation de pression de carburant déterminée.

8. Procédé de compensation selon la revendication 7,
**caractérisé par** la réduction de la durée d'ouverture d'aiguille prédéfinie pour chaque buse d'injection d'injecteur de carburant (12) en une quantité correspondant au retard individuel calculé d'ouverture d'aiguille.

9. Unité de commande électronique (24) pour un moteur à combustion, conçu pour réaliser le procédé de surveillance selon l'une quelconque des revendications 1 à 6 et/ou pour réaliser le procédé de compensation selon l'une quelconque des revendications 7 ou 8.
